# FASCICULE DE BREVET EUROPEEN

(11) **EP 2 922 218 B1**
(45) Date de publication et mention de la délivrance du brevet: **25.01.2017**
(21) Numéro de dépôt: 15159195.5
(22) Date de dépôt: 16.03.2015
(51) Int. Cl.: H04B 7/185, G08G 5/00

(54) **Procédé de communication entre une plateforme aéroportée et une station au sol en utilisant le standard VDL mode 2 avec commutation sur une deuxième station au sol en cas de rupture de communication avec la première station.**
Verfahren zur Kommunikation zwischen einer luftgestützten Plattform und einer Bodenstation mittels dem VDL Mode 2 Standard mit Schaltung auf eine zweite Bodenstation im Falle einer Unterbrechung der Verbindung.
Method of communication between an airborne platform and a ground station using the VDL mode 2 standard with switching on a second ground station in case of breakdown of the communication with the first station.

(30) Priorité: 17.03.2014 FR 1452192
(43) Date de publication de la demande: 23.09.2015
(73) Titulaire: Rockwell-Collins France, 31700 Blagnac (FR)
(72) Inventeur: Pelleschi, Stéphane, 81500 Bannieres (FR)
(74) Mandataire: Delumeau, François Guy

(56) Documents cités:
- EP-A2- 2 391 033
- WO-A1-02/30007
- WO-A1-2011/091191
- FR-A1- 2 922 397

## Description

L'invention se situe dans le domaine des procédés de communications de données entre une plateforme aéroportée et des stations au sol, notamment mais pas exclusivement pour le trafic du contrôle aérien.

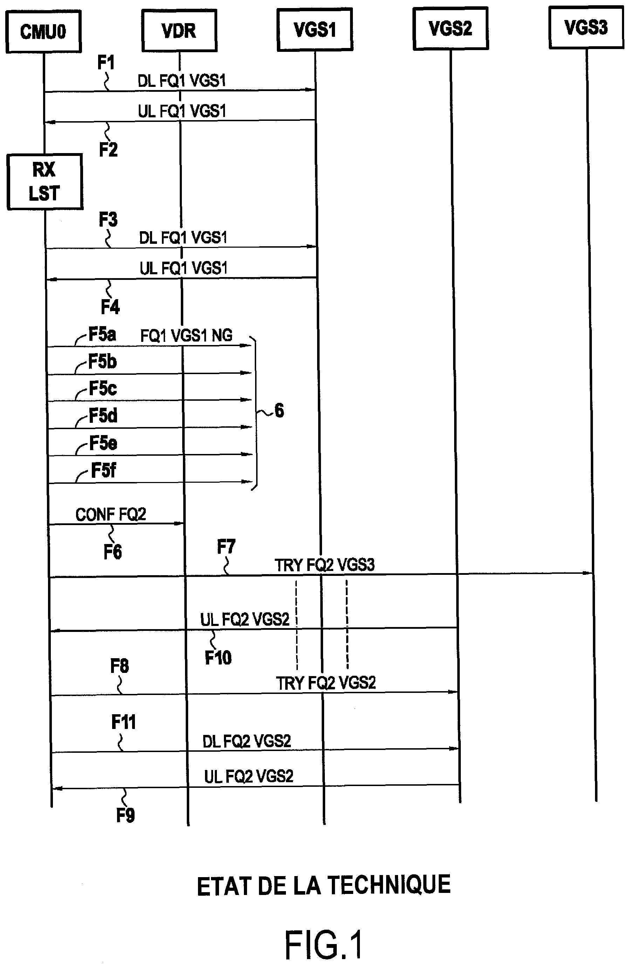

Le contexte de l'invention est présenté en référence à **la** **figure 1** qui illustre un des problèmes de l'état actuel de la technique.

Sur cette figure, on a représenté un dispositif de communication CMU0 du type de ceux embarqués dans les plateformes aéroportées et apte à communiquer, à un instant donné avec une station au sol VGS1, VGS2, ou VGS3 via un module de communication bidirectionnel VDR configuré pour fonctionner sur la fréquence de cette station, selon le protocole VDL (VHF Data Link) mode 2.

On rappelle que le protocole de communication de données VDL mode 2 peut notamment être utilisé pour le contrôle de trafic aérien (en anglais « Air Traffic Control ATC »). L'invention se situe notamment dans le domaine général connu sous l'acronyme CPDLC pour « Controller-Pilot Data Link Communications ».

De façon connue, le dispositif de communication CMU0 envoie des messages descendants (en anglais « Downlink », référencés F1, F3) à la station au sol VGS1 et reçoit de cette station des messages montants (en anglais « Uplink », référencés F2, F4) conformes à ce protocole, par exemple pour du contrôle de trafic aérien.

De façon connue, conformément à ce protocole, les stations au sol VGS1, VGS2, VGS3 sont aptes à diffuser régulièrement, environ toutes les 90 secondes, un message GSIF comportant au minimum l'identifiant de la station émettrice et éventuellement une liste LST de couples, dans laquelle chaque couple associe à une fréquence, l'identifiant d'une station au sol apte à communiquer sur cette fréquence.

Dans l'exemple de la figure 1, le dispositif de communication CMU0 est donc régulièrement informé, par la station au sol VGS1 sur la fréquence FQ1, qu'il existe une station au sol VGS3 et que cette station communique sur la fréquence FQ2. Nous supposerons également qu'il existe une station au sol VGS2 sur la fréquence FQ2.

Mais tant que le dispositif de communication CMU0 est en liaison avec la station au sol VGS1 sur la fréquence FQ1, il n'entend pas les messages diffusés par les stations sur les autres fréquences.

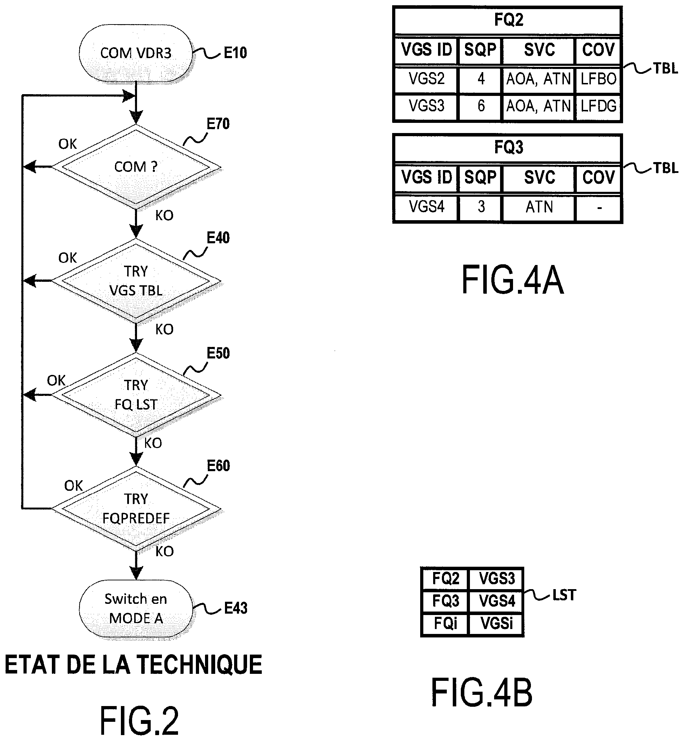

La figure 2 illustre, sous forme d'organigramme, l'établissement, la perte et les tentatives de rétablissement de la communication dans l'état actuel de la technique.

La première étape E10 de cet organigramme représente l'établissement de la communication par le dispositif de communication CMU0 avec la station au sol VGS1 sur la fréquence FQ1.

Une fois la communication établie, le dispositif de communication CMU0 s'assure, au cours d'une étape E70, que cette communication est maintenue.

Les références F5a à F5f de la figure 1 illustrent le comportement du dispositif de communication CMU0 conforme au protocole VDL mode 2 lorsqu'il perd la communication avec la station au sol VGS1.

Conformément à ce protocole, le dispositif de communication CMU0 effectue, au cours de l'étape E70, 6 tentatives avant de considérer que la communication est rompue, pour une durée totale d'environ 45 secondes.

Lorsque l'échec de la communication est avéré, le dispositif de communication déploie quatre stratégies pour tenter de rétablir la communication au cours des étapes E40 (stratégie 1), E50 (stratégies 2 et 3) et E60 (stratégie 4).

Plus précisément, au cours d'une étape E40, le dispositif de communication tente d'établir une communication avec les stations au sol entendues sur la fréquence courante FQ1.

En cas d'échec, le dispositif de communication essaie ensuite d'établir, au cours d'une étape E50, une communication sur une fréquence de la liste LST précitée, à savoir, dans notre exemple la fréquence FQ2. Pour cela il configure (référence F6) le module de communication bidirectionnel VDR pour qu'il communique sur la fréquence FQ2. Le dispositif de communication essaie ensuite d'établir une communication avec la station au sol communiquant sur cette fréquence FQ2, à savoir, dans notre exemple, avec la station au sol VGS3 (référence F7).

Si cette tentative échoue, c'est-à-dire après 6 échecs répétés pour une durée totale de 45 secondes, le dispositif de communication tente d'établir une communication (référence F8) avec une autre station au sol VGS2, préalablement entendue sur la même fréquence FQ2 (référence F10).

Si cette tentative aboutit, le dispositif de communication CMU0 communique effectivement avec la station au sol VGS2, sur la fréquence FQ2, comme l'illustrent les messages descendant et montant référencés F11, F9, et s'assure, au cours de l'étape E70, que cette communication est maintenue.

Si lors de l'étape E50, toutes les fréquences de la liste LST ont été essayées sans succès, le dispositif de communication CMU0 tente, au cours d'une étape E60, d'établir une communication sur une fréquence prédéfinie dans le standard VDL Mode 2.

Enfin si cette dernière tentative d'établissement de communication échoue, le dispositif de communication CMU0 considère que la communication en VDL Mode 2 est interrompue et bascule, au cours d'une étape E43, sur un autre mode de communication, à savoir en mode A dans notre exemple.

La présente invention vise à améliorer ce procédé de communication.

### Objet et résumé de l'invention

Plus précisément, l'invention vise, selon un premier aspect, un procédé de gestion de fréquences compatible avec le mécanisme de gestion de fréquences défini par le standard VDL mode 2, ce procédé étant mis en oeuvre par un dispositif de communication embarqué dans une plateforme aéroportée, ce dispositif de communication étant apte à configurer au moins un module de communication bidirectionnel et au moins un module de réception indépendant, l'un des modules bidirectionnels étant en communication avec une première station au sol sur une première fréquence, le dispositif de communication étant apte à communiquer avec ladite station au sol en VDL mode 2.

Ce procédé comporte:
- une étape de réception, sur la première fréquence, d'un message comportant une liste comportant au moins un couple, chaque couple associant à une fréquence, l'identifiant d'une station au sol apte à communiquer sur cette fréquence;
- sur réception de ce message, une étape d'activation, en réception, d'au moins un des modules précités, pour écouter au moins une deuxième fréquence de la liste;
- une étape de réception via l'un des modules activés, d'au moins un message émis par au moins une deuxième station au sol sur une dite deuxième fréquence, ce message comportant des informations permettant à la plateforme aéroportée d'établir une communication avec cette deuxième station au sol;
- une étape de détection d'au moins un critère représentatif d'une rupture de la communication avec la première station au sol;
- une étape de sélection d'une station au sol cible parmi celles entendues sur ladite au moins une deuxième fréquence au cours de l'étape de réception précitée; et
- une étape de configuration d'un desdits modules bidirectionnels pour communiquer avec la station cible au sol sur la deuxième fréquence.

Corrélativement, l'invention concerne aussi un dispositif de communication embarqué dans une plateforme aéroportée compatible avec le mécanisme de gestion de fréquences défini par le standard VDL mode 2, ce dispositif étant apte à configurer au moins un module de communication bidirectionnel et au moins un module de réception indépendant, l'un de ces modules bidirectionnels étant apte à établir une communication avec une première station au sol sur une première fréquence, ce dispositif de communication étant apte à communiquer avec la station au sol en VDL mode 2. Ce dispositif comprend:
- des moyens de réception d'un message comportant une liste comportant au moins un couple, chaque couple associant à une fréquence, l'identifiant d'une station au sol apte à communiquer sur la fréquence;
- des moyens pour activer en réception, sur réception du message précité, au moins un des modules, pour écouter au moins une deuxième fréquence de la liste;
- des moyens pour détecter au moins un critère représentatif d'une rupture de la communication avec la première station au sol;
- des moyens de réception, via l'un desdits modules activés, d'au moins un message émis par au moins une deuxième station au sol sur une dite deuxième fréquence, ce message comportant des informations permettant à ladite plateforme aéroportée d'établir une communication avec la deuxième station au sol;
- des moyens de sélection d'une station au sol cible parmi celles entendues sur la deuxième fréquence ; et
- des moyens de configuration d'un des modules bidirectionnels pour communiquer avec la station cible au sol sur la deuxième fréquence.

Ainsi, et d'une façon générale, l'invention vise à diminuer, lorsque c'est possible, la durée pour établir une communication avec une nouvelle station au sol lorsqu'une rupture de communication avec la station au sol courante est détectée.

L'invention propose d'écouter la deuxième fréquence même si la communication avec la station au sol courante est satisfaisante. Cette caractéristique permet à la plateforme aéroportée de maintenir à jour une connaissance des stations au sol dans son environnement.

En particulier, lorsqu'il existe effectivement au moins une station au sol apte à communiquer avec la plateforme aéroportée sur une des fréquences de la liste précitée, l'invention permet de basculer directement vers une telle station lorsqu'une rupture de communication avec la station au sol courante est détectée.

Cela permet d'éviter les échecs d'établissement de communication, déjà décrits en références F5a à F5f de la figure 1, alors qu'il existe des stations au sol aptes à communiquer avec la plateforme aéroportée tout en conservant un comportement conforme au standard VDL mode 2.

En particulier, l'invention permet également de sélectionner la nouvelle station au sol cible parmi un ensemble de stations effectivement disponibles, à savoir avec une station au sol avec laquelle il est possible d'établir une connexion. Cela a pour effet d'éviter de chercher à se connecter à une première station puis basculer ensuite sur une seconde station ayant des critères de communication plus adaptés, tels que la qualité du signal ou les services offerts, et donc d'encombrer la bande passante par des messages d'établissement de communications inutiles.

Dans un mode particulier de réalisation, la sélection de la station au sol cible, est effectuée, parmi celles entendues sur la deuxième fréquence, en fonction d'au moins un élément choisi parmi :
- les conditions radio entre la plateforme aéroportée et la station au sol ;
- une tarification privilégiée concédée à l'opérateur de la plateforme aéroportée ;
- des services offerts par la station au sol ;
- une indication selon laquelle la station couvre l'aéroport de destination.

Le fait de pouvoir sélectionner la station au sol la plus appropriée permet d'éviter le basculement entre stations et donc de limiter l'utilisation de la bande passante de la fréquence.

Dans un mode particulier de réalisation, au cours de l'étape d'activation, on active les modules de réception disponibles pour écouter sur les fréquences de la liste, les fréquences étant sélectionnées de manière aléatoire.

Ainsi, si des stations sont entendues et qu'elles sont utilisées suite à la perte de communication, elles communiquent sur une fréquence de la liste choisie de façon aléatoire.

On opère ainsi conformément au standard VDL mode 2.

Dans un mode particulier de réalisation, le procédé de gestion de fréquences selon l'invention comporte une étape d'activation, en réception, d'un des modules de réception, pour écouter au moins une fréquence d'un ensemble de fréquences prédéfinies lorsque le nombre des modules de réception indépendants est supérieur au nombre de couples dans la liste, cet ensemble comportant la fréquence commune dite Common Signaling Channel (CSC) définie dans le standard VDL Mode 2.

L'invention permet ainsi, lorsqu'une rupture de communication avec la station au sol courante est détectée, de basculer directement vers une des stations entendues sur l'ensemble des fréquences prédéfinies lorsqu'aucune station n'a été entendue sur les fréquences de la liste.

Cela permet d'éviter les échecs d'établissement de communication, déjà décrits, alors qu'il existe des stations aptes à communiquer avec plateforme aéroportée tout en conservant un comportement conforme au standard VDL mode 2.

Dans un mode particulier de réalisation, la plateforme aéroportée configure, pour communiquer avec ladite station au sol cible sur ladite deuxième fréquence, le module de communication bidirectionnel qu'elle utilisait pour communiquer avec ladite première station au sol sur la première fréquence.

Ce mode de réalisation sera privilégié lorsque le module de réception indépendant activé pour écouter sur la deuxième fréquence est normalement utilisé en priorité pour un autre usage, par exemple pour seconder un module de communication audio entre le pilote et le sol.

En variante, la plateforme aéroportée configure, pour communiquer avec ladite station au sol cible sur ladite deuxième fréquence, un autre module de communication bidirectionnel que celui utilisé pour communiquer avec ladite première station au sol sur ladite première fréquence.

Ce mode particulier de réalisation permet, lorsque la tentative d'établissement d'une communication sur la deuxième fréquence échoue, la communication sur la première fréquence ayant été perdue, d'écouter sur deux fréquences simultanément et donc, statistiquement, d'accélérer la détection d'une fréquence et d'une station au sol disponible, autrement dit de maximiser les chances d'établir une communication dans les plus brefs délais.

L'invention vise aussi une plateforme aéroportée comportant un dispositif de communication tel que mentionné ci-dessus, au moins un module de communication bidirectionnel et au moins un module de réception indépendant.

Les caractéristiques et avantages particuliers du dispositif de communication et de la plateforme aéroportée conformes à l'invention sont similaires à ceux du procédé de gestion de fréquences mentionné ci-dessus.

Dans un mode particulier de réalisation, les différentes étapes du procédé de gestion de fréquences sont déterminées par des instructions de programmes d'ordinateurs.

En conséquence l'invention vise aussi un programme d'ordinateur sur un support d'informations, ce programme étant susceptible d'être mis en oeuvre dans un dispositif de communication, une partition d'un boîtier avionique multifonctions ou plus généralement dans un ordinateur, ce programme comportant des instructions adaptées à la mise en oeuvre des étapes d'un procédé de gestion de fréquences tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur, et comportant des instructions d'un programme d'ordinateur permettant l'exécution des étapes du procédé de gestion de fréquences tel que mentionné ci-dessus.

Ce support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou le disque dur d'un ordinateur ou, comme c'est souvent le cas dans le domaine de l'avionique, d'un dispositif connu sous le nom de dataloader.

Alternativement, ce support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 illustrent un procédé de communication conforme à l'état de la technique ;
- la figure 3 représente une plateforme aéroportée conforme à un mode particulier de réalisation de l'invention ;
- la figure 4A représente des tables de stations pouvant être utilisées dans un mode particulier de réalisation de l'invention ;
- la figure 4B représente un exemple de liste de couples ;
- la figure 5 représente, sous forme d'organigramme, un processus de gestion de liste de couples pouvant être utilisé dans un mode particulier de réalisation de l'invention ;
- la figure 6 représente sous forme d'organigramme, les principales étapes d'un procédé de gestion de fréquences conforme à un mode particulier de réalisation de l'invention ;
- la figure 7 représente sous forme d'organigramme, les principales étapes d'une première stratégie complémentaire pouvant être mise en oeuvre par un dispositif de communication conforme à l'invention pour rétablir une communication ;
- la figure 8 représente un processus permettant, à un dispositif de communication conforme à un mode particulier de réalisation de l'invention, de se connecter sur une fréquence comprise dans un ensemble de fréquences ;
- les figures 9A et 9B représentent, sous forme d'organigramme, les principales étapes mises en oeuvre par un module de réception pour écouter une fréquence donnée, dans un mode particulier de réalisation de l'invention ;
- les figures 10 et 11 représentent, sous forme d'organigramme, un processus de maintien de tables de stations conforme à un mode particulier de réalisation de l'invention ;
- la figure 12 représente sous forme d'organigramme, les principales étapes d'une première stratégie pouvant être mise en oeuvre par un dispositif de communication conforme à l'invention pour rétablir une communication.

### Description détaillée d'un mode de réalisation

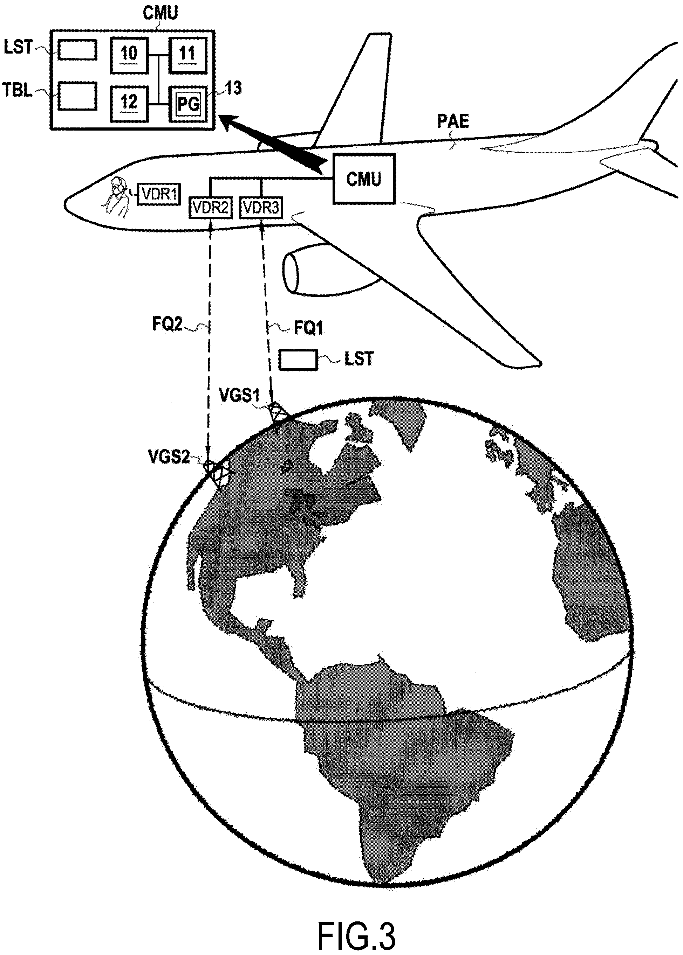

La figure 3 représente une plateforme aéroportée PAE conforme à un mode particulier de réalisation de l'invention. Elle se distingue de celles de l'art antérieur par le procédé mis en oeuvre par le dispositif de communication CMU qu'elle embarque.

Sur la figure 3, on a également représenté, deux stations au sol VGS1, VGS2, chacune étant apte à communiquer sur une fréquence donnée, respectivement FQ1, FQ2 et en particulier à diffuser régulièrement des messages GSIF comportant leurs identifiants en mode broadcast.

La plateforme aéroportée PAE comporte dans cet exemple, outre le dispositif de communication CMU précité, deux modules de communication bidirectionnels indépendants l'un de l'autre VDR2 et VDR3. Le dispositif de communication CMU peut être hébergé dans un boitier dédié ou dans un boitier embarquant les modules communication bidirectionnels VDR. Il peut aussi être hébergé dans une partition d'un boitier avionique multifonctions. Les modules peuvent être intégrés dans des boîtiers indépendants ou des modules logiques hébergés dans le même boitier.

Conformément à l'invention, le dispositif de communication CMU est apte à configurer chacun de ces modules de communication bidirectionnels indépendamment l'un de l'autre pour écouter sur une fréquence donnée, par exemple respectivement FQ1, FQ2 les messages émis par les stations au sol.

Conformément au standard VDL Mode 2, le dispositif de communication CMU maintient, une table de stations TBL comportant au moins l'identifiant des stations dont il a reçu un message MSGID depuis une durée inférieure à une durée prédéterminée.

Dans un mode particulier de réalisation de l'invention, le dispositif de communication CMU maintient une table TBL pour chaque fréquence écoutée par les modules de communication. Ce processus est activé dès qu'un module de réception est activé sur une fréquence.

Dans le mode de réalisation décrit ici ce processus de maintien des tables de stations TBL est scindé en deux processus, à savoir :
- un processus « FILL TBL » de remplissage des tables de stations TBL, ce processus étant activé (respectivement désactivé) conjointement à l'activation (respectivement la désactivation) de chaque module de réception indépendant et de chaque module de communication bidirectionnel ; et
- un processus « PURGE TBL » de nettoyage des tables de stations TBL qui supprime les entrées obsolètes conformément au standard VDL Mode 2, ce processus étant activé dès que le dispositif de communication CMU active une communication en VDL Mode 2.

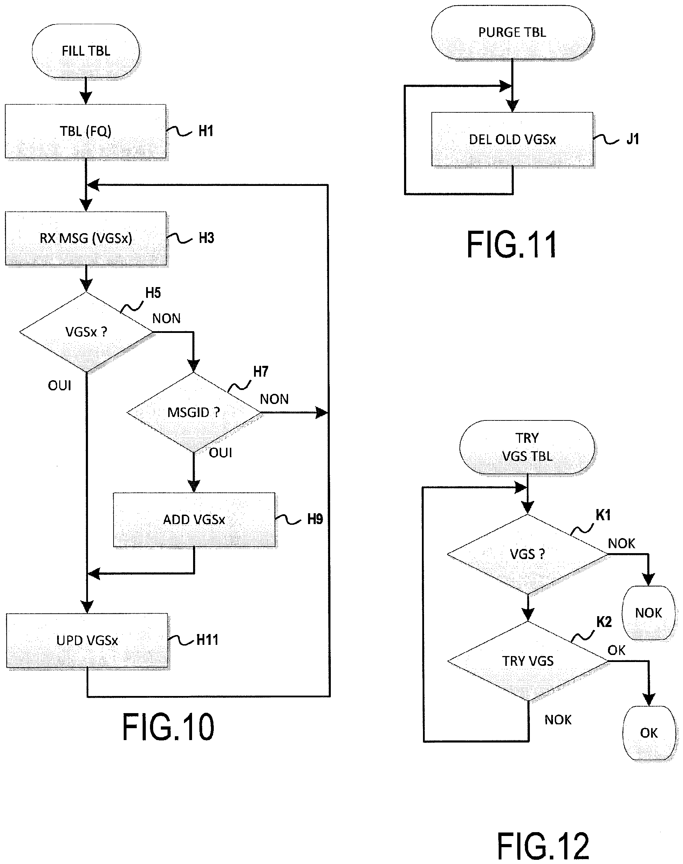

Ces deux processus, qui constituent le processus de maintien des tables de station dans ce mode particulier de réalisation, sont illustrés sous forme d'organigramme aux figures 10 et 11 et seront décrits ultérieurement.

Un exemple de tables de stations TBL est représenté à la figure 4A. Ces tables indiquent la fréquence à laquelle elles sont associées (FQ2 et FQ3) et comportent l'identifiant des stations au sol entendues sur cette fréquence. Dans cet exemple particulier, elles comportent en outre :
- les paramètres de qualité de signal SQP ;
- les paramètres de services offerts SVC ; et
- des informations de couverture d'aéroport.

La première table associée à la fréquence FQ2 comporte l'identifiant des stations au sol VGS2 et VGS3 avec une qualité de signal de 4 et 6 respectivement, les services AOA et ATN et les aéroports LFBO et LFDG respectivement. La seconde table, associée à la fréquence FQ3, comporte l'identifiant de la station au sol VGS4 avec une qualité de signal de 3 le service ATN uniquement mais pas d'information de couverture d'aéroport.

Lorsqu'une station au sol a été identifiée par le dispositif de communication CMU, le dispositif de communication CMU est apte à communiquer avec cette station au sol, via le module de communication bidirectionnel configuré sur la fréquence de la station au sol, conformément au protocole de communication de données VDL (VHF Data Link) mode 2.

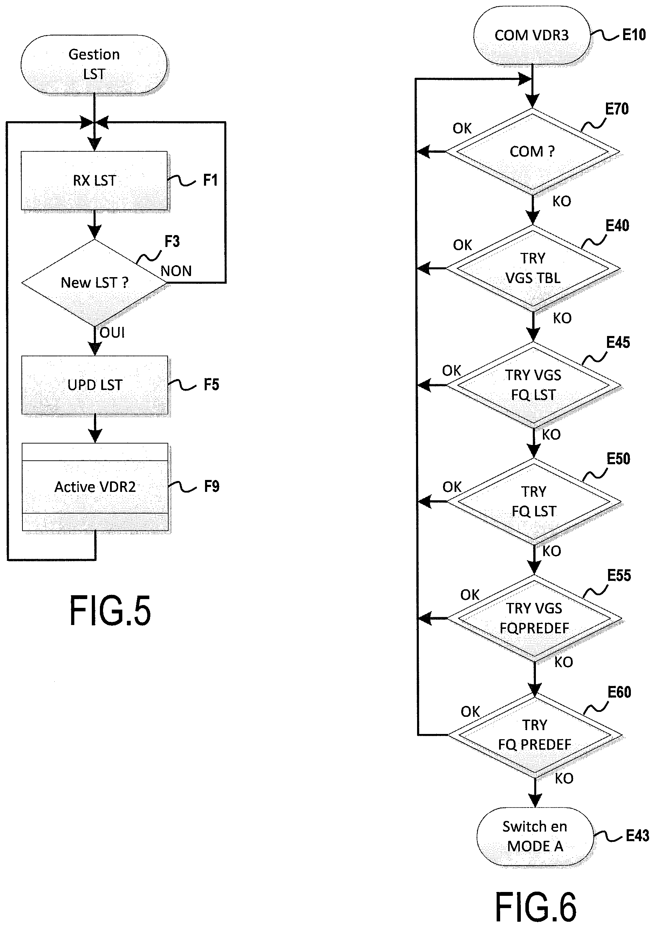

Conformément au standard VDL Mode 2 lorsque le dispositif de communication CMU est connecté avec une station au sol, il peut recevoir, une liste de couples LST, cette liste étant gérée dans cet exemple comme décrit ultérieurement à la figure 5. On rappelle, que chaque couple de la liste LST associe à une fréquence, l'identifiant d'une station au sol apte à communiquer sur cette fréquence. Dans le mode de réalisation décrit ici, le dispositif de communication CMU active ce processus dès qu'il est connecté avec une station au sol.

Un exemple d'une telle liste LST est représenté à la **figure 4B****.** Cette liste comporte l'identifiant d'une station au sol VGS3 apte à communiquer sur la fréquence FQ2, l'identifiant d'une station au sol VGS4 apte à communiquer sur la fréquence FQ3 et l'identifiant d'une station au sol VGSᵢ apte à communiquer sur une fréquence FQᵢ.

Sur la figure 3, on a également représenté un module de communication de type voix VDR1, permettant au pilote de la plateforme aéroportée PAE d'établir des communications vocales avec le sol.

Le dispositif de communication CMU présente l'architecture matérielle d'un ordinateur. Il comporte notamment un processeur 10, une mémoire vive de type RAM 11, une mémoire non volatile réinscriptible 12, par exemple un disque dur ou une mémoire EEPROM, et une mémoire morte de type ROM 13. Dans le cas où le dispositif de communication CMU est hébergé dans une partition, le boitier avionique multifonctions qui héberge cette partition met à disposition de manière connue, une partie de ses ressources et notamment une partie de son ou ses processeurs, de sa mémoire vive, de sa mémoire non volatile, de sa mémoire morte et de ses moyens de communication afin d'offrir un environnement en tout point identique à une architecture matérielle et cela de manière indiscernable pour le dispositif de communication CMU.

La mémoire morte 13 constitue un support d'enregistrement conforme à l'invention, lisible par dispositif de communication CMU, sur lequel est enregistré un programme d'ordinateur conforme à l'invention comportant des instructions pour l'exécution des étapes d'un procédé de gestion de fréquences selon l'invention, les principales étapes étant représentées aux figures 5 à 12.

Dans le cas où le dispositif de communication CMU est hébergé dans une partition, cette mémoire 13 est mise à disposition par le boitier avionique multifonctions qui héberge cette partition. Le contenu de cette mémoire est mis à jour par des méthodes classiques du monde de l'avionique par exemple et de manière non limitative par des médias tel les disquettes ou clefs USB, ou par des liaisons de type RS232, A615, AFDX, Ethernet, à partir de plateformes de type ordinateur portable ou dataloader.

On suppose qu'au cours d'une étape E10, le dispositif de communication CMU configure le module de communication bidirectionnel VDR3 pour qu'il écoute (en anglais « scan »), sur la fréquence FQ1 et établisse, via ce module, une communication selon le protocole VDL mode 2 avec la station au sol VGS1.

Le dispositif de communication peut ainsi envoyer des messages descendants (Downlink) à cette station au sol VGS1 et recevoir des messages montants de cette station (Uplink) conformes à ce protocole, par exemple pour du contrôle de trafic aérien. Ces messages sont similaires ou du type de ceux référencés F1, F2 sur la figure 1 déjà décrite.

Comme indiqué précédemment, à l'établissement d'une connexion avec une station sol le dispositif de communication CMU lance un processus de gestion de liste de couples dont les principales étapes F1 à F9 sont représentées sous forme d'organigramme à la figure 5.

Ce processus de gestion de liste de couples comporte une première étape F1au cours de laquelle le dispositif de communication CMU reçoit, via le module de communication bidirectionnel VDR3 un message GSIF diffusé par la station VGS1, ce message comportant, de façon connue, outre l'identifiant de la station émettrice VGS1 , une liste LST de couples, chaque couple associant à une fréquence, l'identifiant d'une station au sol apte à communiquer sur cette fréquence.

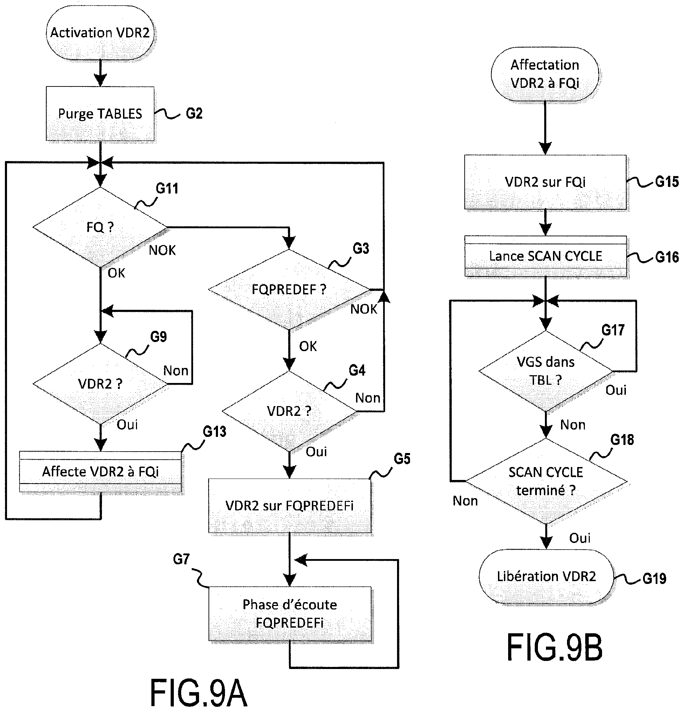

En parallèle de la communication avec la station au sol VGS1, dès réception du message reçu à l'étape F1, et comme décrit ultérieurement en référence aux figures 9A et 9B, le dispositif de communication CMU, active au moins un module de réception indépendant de VDR3 pour écouter sur une des fréquences de la liste LST.

Mais dans le mode de réalisation décrit ici, ce processus d'activation n'est effectué que si la liste reçue à l'étape F1est différente de la dernière liste LST reçue par le dispositif de communication CMU.

Par conséquent, au cours d'une étape F3, le dispositif de communication CMU vérifie si la liste LST reçue à l'étape F1est différente de la dernière liste LST reçue ; si ce n'est pas le cas, l'étape F3 est suivie par l'étape F1au cours de laquelle le dispositif de communication CMU attend de recevoir via le module de communication bidirectionnel VDR3, le prochain message comportant une liste LST de couples.

Si la liste LST reçue à l'étape F3 est différente de la dernière liste reçue, avant d'activer un module de réception indépendant de VDR3, le dispositif de communication CMU met à jour (étape F5) sa liste de couples, puis lance (étape F9) l'exécution du processus d'activation d'un module bidirectionnel indépendant de VDR3, dont les principales étapes G2 à G19 vont maintenant être décrites en référence aux figures 9A et 9B.

Au cours d'une première étape G2 de ce processus d'activation, le module de communication CMU stoppe le processus d'activation précédent et en particulier toutes les étapes d'attente de ressources telles que les étapes G11, G9, G7, G17 décrites ci-après, désactive tous les modules de réception indépendants de VDR3 actuellement activés et supprime toutes les tables de stations TBL, à l'exception de celle utilisée par VDR3. Il vérifie ensuite au cours d'une étape G11 s'il reste au moins une fréquence de la liste LST qui ne serait pas en cours d'écoute et le cas échéant choisit aléatoirement une fréquence FQi parmi ces fréquences.

Si une telle fréquence FQi existe, le dispositif de communication CMU recherche (étape G9) un module de réception disponible et affecte (étape G13) ce module à l'écoute de cette fréquence FQi comme décrit à la figure 9B. En l'absence de module disponible le dispositif de communication CMU attend qu'un module de réception soit libéré (boucle G9 de la figure 9A).

On notera que sur réception d'un message comportant une liste LST, le dispositif de communication CMU libère (étape G2) tous les modules de réception VDR2 et cesse l'écoute de fréquences. Ce mécanisme garantit la réussite des tests des étapes G11 et G9 et par conséquent le lancement de l'étape G13 d'activation, en réception, d'au moins un desdits modules VDR2, pour écouter au moins une fréquence FQ2 de la liste LST.

Si la liste LST comporte plusieurs couples et que la plateforme aéroportée PAE comporte plusieurs modules de réception indépendants VDR2 la boucle des étapes G11, G9 et G13 se répète.

Si le dispositif de communication CMU ne trouve à l'étape G11 aucune fréquence de la liste LST qui ne soit pas déjà en cours d'écoute, il réitère le test jusqu'à ce qu'il y ait une fréquence de la liste qui ne soit plus en écoute.

Dans un mode de réalisation particulier si le dispositif de communication CMU ne trouve à l'étape G11 aucune fréquence de la liste qui ne soit en cours d'écoute, il vérifie au cours d'une étape G3 s'il existe parmi un ensemble de fréquences prédéfinies FQPREDEF au moins une fréquence FQPREDEFi qui ne soit pas actuellement en cours d'écoute. Cet ensemble de fréquences prédéfinies est constitué de fréquences à usage particulier comme la fréquence commune dite Common Signaling Channel (CSC) définie dans le standard VDL Mode 2.

Si tel est le cas le dispositif de communication CMU recherche (étape G4) un module de réception indépendant de VDR3 disponible et active (étape G5) ce module pour écouter sur la fréquence prédéfinie FQPREDEFi choisie à l'étape G3. Ce module de réception VDR2 reste alors en permanence à l'écoute de cette fréquence prédéfinie FQPREDEFi (boucle G7), cette phase d'écoute n'étant interrompue que par la désactivation de tous les modules de réception indépendants opérée par l'étape G2 ou par l'arrêt par le dispositif de communication CMU de la communication VDL Mode 2 tel qu'il intervient à l'étape E43.

Dans ce mode de réalisation, si le dispositif de communication CMU ne trouve à l'étape G3 aucune fréquence prédéfinie FQPREDEFi qui ne soit en cours d'écoute ou si la recherche à l'étape G4 d'un module de réception indépendant de VDR3 disponible échoue alors le dispositif de communication CMU retourne à l'étape de vérification G11 déjà décrite.

En référence à la figure 9B, nous allons maintenant décrire les étapes G15 à G19 qui illustrent l'activation en réception d'un module VDR2, pour écouter au moins une deuxième fréquence FQi de la liste LST qui survient à l'étape G13 précédemment décrite.

Au cours de la première étape G15 de ce processus d'activation le dispositif de communication CMU active le module de réception indépendant de VDR3 identifié à l'étape G9 pour écouter la fréquence choisie à l'étape G11. Dans le mode de réalisation décrit ici, cela déclenche l'activation du processus « FILL TBL » de remplissage d'une table de stations TBL, ce processus illustré à la figure 10 étant décrit ultérieurement.

Le dispositif de communication CMU déclenche (étape G16) un compteur permettant d'effectuer un cycle d'écoute (en anglais Scan Cycle) comme décrit dans le standard VDL Mode 2, puis vérifie (étape G17), la présence d'une entrée dans la table de stations TBL. Si tel est le cas, le dispositif de communication CMU réitère cette étape G17 tant qu'au moins une station est présente dans la table. Cela permet au dispositif de communication CMU de disposer d'au moins une fréquence sur laquelle il dispose d'au moins un identifiant d'une station au sol apte à communiquer sur cette fréquence. Ces informations permettent d'établir de manière avantageuse une communication en VDL mode 2 avec une station au sol à portée de la plateforme aéroportée PAE.

Si le dispositif de communication CMU trouve une table des stations TBL vide à l'étape G17, il vérifie au cours d'une étape G18 l'expiration du compteur armé à l'étape G16. Si ce compteur n'a pas encore expiré, l'étape G18 est suivie par l'étape G17 déjà décrite.

Si le compteur a expiré (étape G18) et qu'aucune station n'est renseignée dans la table des stations (étape G17), l'étape G18 est alors suivie par une étape G19 au cours de laquelle le dispositif de communication CMU libère le module de réception indépendant de VDR3. Ceci a pour conséquence :
- de rendre ce module de réception à nouveau disponible pour le processus d'activation illustré par la figure 9A; et
- de stopper le processus de remplissage des tables de stations TBL, ce processus ayant été lancé par l'activation du module de réception indépendant de VDR3 à l'étape G15.

En référence à la figure 10, nous allons maintenant décrire les principales étapes H1 à H11 du processus « FILL TBL » de remplissage des tables des stations TBL. Ce processus conjointement avec celui « PURGE TBL » de nettoyage des tables des stations de la figure 11 constituent le processus de maintien des tables des stations TBL dans ce mode de réalisation.

De façon connue ces processus ou des processus équivalents sont exécutés par les dispositifs de communication afin de maintenir, conformément au standard VDL Mode 2, la liste des stations entendues sur la fréquence sur laquelle ces dispositifs de communication sont connectés ou tentent de se connecter avec une station au sol.

On rappelle que dans ce mode de réalisation, le dispositif de communication CMU exécute ce processus de maintien de table des stations dès qu'un module de réception VDR2, VDR3 écoute sur une fréquence FQi.

La première étape H1 du processus mis en oeuvre pour écouter une fréquence FQ avec un module de réception VDR est de créer une table des stations vide associée à la fréquence FQ (table TBL).

Lorsque le dispositif de communication CMU reçoit (étape H3), via un module de communication VDR, un message émis par une station au sol VGSx sur la fréquence FQ, il vérifie (étape H5) si cette station au sol est déjà présente dans la table de ce module. Si ce n'est pas le cas, et que le message reçu est de type MSGID, le dispositif de communication CMU mémorise les informations de ce message permettant d'établir une communication avec cette station au sol VGSx, et ajoute l'identifiant de la station au sol VGSx dans la table des stations TBL associée à la fréquence FQ (étapes H7 et H9). Dans l'exemple décrit ici, le dispositif de communication mémorise que la station au sol VGSx est à portée de la plateforme aéroportée PAE, apte à communiquer sur la fréquence FQi, et éventuellement (comme décrit précédemment en référence à la figure 4A) d'autres informations sur cette station au sol, par exemple :
- les conditions radio entre la plateforme aéroportée et la station au sol ;
- une tarification privilégiée concédée à l'opérateur de la plateforme aéroportée ;
- des services offerts par la station au sol
- une indication selon laquelle la station couvre l'aéroport de destination.

S'il est déterminé à l'étape H5 que la station au sol VGSx est déjà présente dans la table du module VDR ou si elle a été ajoutée à l'étape H9, le dispositif de communication met les informations de cette station au sol VGSx à jour dans la table du module VDR au cours d'une étape H11.

La figure 11 représente un processus « PURGE TBL » toujours actif dans ce mode de réalisation, ce processus comportant une boucle constituée par une seule étape J1 pour supprimer de la table TBL associée à un module de réception VDR, l'identifiant des stations dont ce module n'a pas reçu de message MSGID depuis la durée prédéterminée précitée.

Le dispositif de communication maintient en permanence une structure de données comportant, à tout instant, les informations lui permettant d'établir une communication en VDL mode 2 avec une ou plusieurs stations au sol à portée de la plateforme aéroportée PAE.

Dans le mode de réalisation décrit ici, cette structure de données SD est mémorisée dans la mémoire non volatile réinscriptible 12 du dispositif de communication CMU.

Afin de bien faire ressortir certaines caractéristiques de l'invention, nous revenons à la figure 2 qui illustre un mode de réalisation représentatif de l'état de l'art, et nous nous plaçons dans le contexte dans lequel le module de communication VDR3 communique avec une station au sol sur la fréquence FQ1.

On notera que conformément au standard VDL Mode 2, le dispositif de communication CMU0 pourra être amené à changer la station au sol avec laquelle il communique pour une autre entendue sur la même fréquence. Pour cela le dispositif de communication CMU0 tente d'établir une connexion avec la nouvelle station avant de mettre fin à la connexion précédente ; ainsi ce changement se fait sans perte de communication.

Au cours d'une étape E70, le dispositif de communication CMU0 détermine si la communication avec la station au sol courante est rompue. Tant que ce n'est pas le cas, le module de communication VDR3 continue à communiquer avec la station au sol courante sur la fréquence FQ1 et à surveiller l'état de la communication.

Conformément au standard VDL Mode 2, en cas de perte de communication, le dispositif de communication CMU0 met en place quatre stratégies conventionnelles selon cet ordre :
- premièrement, essayer d'établir (étape E40) une communication avec les stations au sol entendues sur la fréquence courante FQ1 ;
- deuxièmement, essayer d'établir (étape E50) une communication avec chacune des stations au sol VGSi sur la fréquence FQi, les couples (FQi, VGSi) étant choisis aléatoirement parmi ceux de la liste des couples LST reçue à l'étape F1 ;
- troisièmement, écouter (étape E50) sur chacune desdites fréquences, en espérant entendre une station au sol pour s'y connecter ;
- quatrièmement, écouter (étape E60) sur la fréquence commune prédéfinie FQPREDEF du standard VDL mode 2, en espérant entendre une station au sol pour s'y connecter ;
- finalement considérer que la communication en mode VDL Mode 2 est rompue et basculer en mode A conformément au standard VDL Mode2.

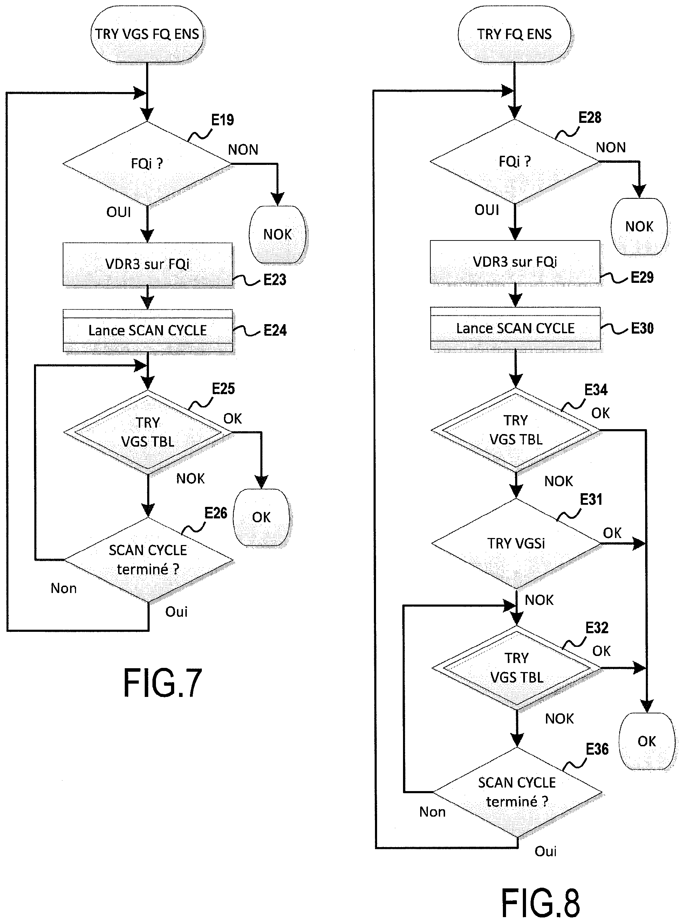

Il faut noter que les stratégies d'écoute conventionnelles deux et trois fonctionnent de concert et qu'un mode particulier de réalisation sera décrit ultérieurement à la figure 8.

Dans le mode de réalisation décrit ici et en référence à la figure 6, le dispositif de communication CMU met en place les quatre stratégies conventionnelles introduites ci-desus et deux stratégies complémentaires suivantes propres à l'invention :
- la première stratégie complémentaire propre à l'invention consiste à essayer d'établir (étape E45) une communication avec les stations au sol entendues sur les fréquences de la liste LST reçue à l'étape F1
- la deuxième stratégie complémentaire propre à l'invention consiste à essayer d'établir (étape E55) une communication avec les stations au sol entendues sur les fréquences prédéfinies FQPREDEF qui n'ont pas été écoutées dans la stratégie précédente.

Nous allons maintenant décrire la première stratégie conventionnelle déployée au cours d'une étape E40 par le dispositif de communication CMU. Les détails de cette étape sont illustrés à la figure 12. Lorsque le dispositif de communication CMU a déterminé (étape E70) que la communication avec la station au sol courante est rompue sur la fréquence FQ1 il va, au cours d'une étape K1, déterminer s'il existe au moins une station au sol VGS dans la table de station TBL associée à la fréquence courante FQ1 et sélectionner une de ces stations. Dans ce mode de réalisation, si plusieurs stations sont présentes dans ladite table il choisit la meilleure station selon une heuristique configurée dans le dispositif de communication CMU. Un exemple d'heuristique consiste à :
- sélectionner l'ensemble des stations ayant un paramètre de qualité de signal SQP supérieur à 6 et à défaut la ou les stations ayant le paramètre de qualité de signal SQP le plus élevé ;
- si la plateforme aéroportée PAE est en phase de descente, sélectionner parmi la sélection précédente, l'ensemble des stations ayant un paramètre de couverture d'aéroport correspondant au code de l'aéroport de destination et à défaut conserver la présélection précédente ;
- sélectionner parmi la sélection précédente, les stations offrant le service (SVC) ATN et à défaut conserver la présélection précédente ;
- choisir enfin la ou les stations ayant le paramètre de qualité de signal SQP le plus élevé et en cas d'égalité choisir aléatoirement parmi ces stations.

Une autre heuristique plus simple à implémenter consiste à choisir la première station de la table TBL. Le choix de la meilleure station sur la fréquence étant effectué par le dispositif de communication CMU, comme dans l'art antérieur alors qu'il est déjà connecté à une station.

Si le dispositif de communication CMU sélectionne effectivement une station à l'étape K1, il tente, au cours d'une étape K2 de se connecter à cette station. Si la connexion échoue il essaye successivement toutes les stations en répétant les étapes K1 et K2.

Si le test de l'étape K1 échoue (soit parce qu'il n'y a pas de station soit parce que toutes les tentatives de connexion de l'étape K2 échouent), le dispositif de communication CMU tente la première stratégie complémentaire propre à l'invention.

Dans cette stratégie déployée au cours de l'étape E45, le dispositif de communication CMU tente de se connecter sur un ensemble ENS de fréquences constitué des fréquences de la dernière liste LST sur lesquelles il a reçu d'au moins une station au sol VGSx, depuis une durée inférieure à une durée prédéterminée définie par le standard VDL mode 2, un message MSGID comportant des informations permettant d'établir une communication avec cette station au sol. Les détails de cette étape sont illustrés à la figure 7.

Au cours d'une première étape E19, le dispositif de communication CMU détermine s'il existe dans l'ensemble ENS précité, une fréquence FQi disponible et non déjà écoutée. Le cas échéant, le dispositif de communication CMU choisit aléatoirement une de ces fréquences FQi, configure le module de réception VDR3 pour écouter sur cette fréquence FQi (étape E23), déclenche (étape E24) un compteur permettant d'effectuer un cycle d'écoute (en anglais Scan Cycle) comme déjà décrit et tente d'établir au cours d'une étape E25, une communication via le module de réception VDR3 avec une station au sol cible parmi celles entendue sur cette fréquence FQi. Si cette tentative d'établissement de communication échoue, le dispositif de communication CMU réitère cette dernière étape pour chacune des stations de la table des stations de la fréquence courante. Dans ce mode de réalisation, cette tentative se déroule comme décrit précédemment dans les étapes K1 et K2.

Lorsque le dispositif de communication CMU ne parvient pas à se connecter à une station à l'étape E25, il vérifie au cours d'une étape E26 l'expiration du compteur armé à l'étape E24. Si ce compteur n'a pas encore expiré, l'étape E26 est suivie par l'étape E25 déjà décrite.

Si le compteur a expiré (E26) et qu'aucune connexion n'a aboutie, l'étape E26 est alors suivie par l'étape E19 déjà décrite dans laquelle, le dispositif de communication CMU réitère le même processus avec les autres fréquences de l'ensemble ENS non encore écoutées.

Lorsque toutes les fréquences de l'ensemble ENS ont été testées, le test de l'étape E19 échoue ce qui marque la fin de la stratégie courante.

Dans les deuxième et troisième stratégies conventionnelles déployées au cours de l'étape E50, le dispositif de communication CMU tente de se connecter sur un ensemble ENS de fréquences constitué des fréquences de la dernière liste LST sauf celles déjà écoutées dans la stratégie précédente. Les détails de cette étape sont illustrés dans un mode de réalisation à la figure 8.

Au cours d'une première étape E28, le dispositif de communication CMU détermine s'il existe dans l'ensemble ENS précité, une fréquence FQi disponible et non déjà écoutée. Le cas échéant le dispositif de communication CMU choisit aléatoirement une de ces fréquences, configure le module de réception VDR3 pour écouter sur cette fréquence FQi (étape E29), déclenche (étape E30) un compteur permettant d'effectuer un cycle d'écoute (en anglais Scan Cycle) comme déjà décrit et tente, dans ce mode particulier de réalisation, d'établir au cours d'une étape E34, une communication via le module de réception VDR3 avec une station au sol cible parmi celles entendue sur cette fréquence FQi. Si cette tentative d'établissement de communication échoue, le dispositif de communication CMU essaie d'établir (E31) une communication via le module de réception VDR3 avec la station au sol VGSi, si celle-ci existe, autrement dit si cette station VGSi est associée à la fréquence FQi dans un couple (FQi, VGSi) de la liste de couples LST reçue à l'étape F1. Cette station existe toujours si l'ensemble ENS testé est un sous-ensemble de la liste des couples LST. Le dispositif de communication CMU essaie ensuite d'établir au cours d'une étape E32, une communication via le module de réception VDR3 avec une station au sol cible parmi celles entendues sur cette fréquence FQi. Si cette tentative d'établissement de communication échoue, le dispositif de communication CMU réitère cette dernière étape avec chacune des stations de la table des stations de la fréquence courante. Dans ce mode de réalisation, cette tentative se déroule comme décrit précédemment dans les étapes K1 et K2.

Lorsque le dispositif de communication CMU ne parvient pas à se connecter à une station à l'étape E32, il vérifie au cours d'une étape E36 l'expiration du compteur armé à l'étape E30. Si ce compteur n'a pas encore expiré, l'étape E36 est suivie par l'étape E32 déjà décrite.

Si le compteur a expiré (E36) et qu'aucune connexion n'a aboutie, l'étape E36 est alors suivie par l'étape E28 déjà décrite dans laquelle, le dispositif de communication CMU va réitérer le même processus avec les autres fréquences de l'ensemble ENS non encore écoutées.

Lorsque toutes les fréquences de l'ensemble ENS ont été testées, le test de l'étape E28 échoue ce qui marque la fin de la stratégie courante.

Dans la stratégie non conventionnelle propre à l'invention et déployée au cours de l'étape E55, le dispositif de communication CMU tente de se connecter sur un ensemble ENS de fréquence constitué des fréquences prédéfinies FQPREDEF sur lesquelles il a reçu d'au moins une station au sol VGSx, depuis une durée inférieure à la durée prédéterminée précitée, un message MSGID comportant des informations permettant d'établir une communication avec cette station au sol. Dans cette stratégie on effectue les mêmes étapes E19 à E26 déjà décrites en référence à la figure 7. Seul le contenu de l'ensemble ENS précité est modifié comme indiqué précédemment. Cette stratégie se termine lorsque toutes les fréquences de l'ensemble ENS ont été testées.

Dans la quatrième stratégie conventionnelle déployée au cours de l'étape E60, le dispositif de communication CMU tente de se connecter sur un ensemble ENS des fréquences constitué des fréquences prédéfinies FQPREDEF sauf celles déjà écoutées au cours de la stratégie précédente. Dans cette stratégie on effectue les mêmes étapes E28 à E36 déjà décrites en référence à la figure 8. Seul le contenu de l'ensemble ENS précité est modifié comme indiqué précédemment.

Cette stratégie se termine lorsque toutes les fréquences de l'ensemble ENS ont été testées. Le dispositif de communication considère alors que le mode VDL mode 2 est interrompu et bascule, au cours de'une étape E43, sur un autre mode de communication, à savoir, dans cet exemple, sur le mode A.

Dans le mode de réalisation décrit ici, la station au sol cible choisie à l'étape E25 est sélectionnée en fonction d'au moins un élément choisi parmi :
- les conditions radio entre la plateforme aéroportée et la station au sol ;
- une tarification privilégiée concédée à l'opérateur de la plateforme aéroportée ;
- des services offerts par la station au sol ; et
- une indication selon laquelle la station couvre l'aéroport de destination.

Dans le mode de réalisation décrit ici, la plateforme aéroportée utilise, pour communiquer avec cette nouvelle station au sol cible sur la deuxième fréquence, le module de communication bidirectionnel VDR3 qu'elle utilisait pour communiquer avec la station au sol précédente sur la première fréquence.

En variante, dans l'exemple de réalisation décrit ici, on pourrait utiliser le module de communication bidirectionnel VDR2 à cet effet, le module de communication VDR3 étant alors disponible pour écouter sur d'autres fréquences conformément aux étapes G9à G13.

## Revendications

1. Procédé de gestion de fréquences compatible avec le mécanisme de gestion de fréquence défini par le standard VDL mode 2, ce procédé étant mis en oeuvre par un dispositif de communication (CMU) embarqué dans une plateforme aéroportée (PAE) apte à configurer au moins un module de communication bidirectionnel (VDR3) et au moins un module de réception indépendant (VDR2), l'un desdits modules bidirectionnels (VDR3) étant en communication avec une première station au sol (VGS1) sur une première fréquence (FQ1), ledit dispositif de communication (CMU) étant apte à communiquer avec ladite station au sol (VGS1) en VDL mode 2, ledit procédé étant **caractérisé en ce qu'**il comporte:
- une étape (F1) de réception, sur ladite première fréquence (FQ1), d'un message comportant une liste (LST) comportant au moins un couple, chaque couple associant à une fréquence (FQ2), l'identifiant d'une station au sol (VGS3) apte à communiquer sur cette fréquence;
- sur réception dudit message, une étape (G13) d'activation, en réception, d'au moins un desdits modules (VDR2), pour écouter au moins une deuxième fréquence de la liste (FQ2);
- une étape (H3) de réception via l'un desdits modules activés (VDR2), d'au moins un message (MSGID) émis par au moins une deuxième station au sol (VGS2) sur une dite deuxième fréquence (FQ2), ce message comportant des informations permettant à ladite plateforme aéroportée d'établir une communication avec ladite deuxième station au sol;
- une étape de détection d'au moins un critère représentatif d'une rupture de la communication avec ladite première station au sol;
- une étape (E25) de sélection d'une station au sol cible (VGS2) parmi celles entendues sur ladite au moins une deuxième fréquence (FQ2) au cours de ladite étape de réception (H3); et
- une étape (E23) de configuration d'un desdits modules bidirectionnels (VDR3) pour communiquer avec ladite station cible au sol (VGS2) sur la deuxième fréquence (FQ2).

2. Procédé de gestion de fréquences selon la revendication 1, **caractérisé en ce que** la sélection (E25) de ladite station au sol cible (VGS2) est effectuée, parmi celles entendues sur ladite au moins une deuxième fréquence (FQ2), en fonction d'au moins un élément choisi parmi :
- les conditions radio entre la plateforme aéroportée et la station au sol ;
- une tarification privilégiée concédée à l'opérateur de la plateforme aéroportée ;
- des services offerts par la station au sol ;
- une indication selon laquelle la station couvre l'aéroport de destination.

3. Procédé de gestion de fréquences selon la revendication 1 ou 2, **caractérisé en ce qu'**au cours de ladite étape d'activation, on active les modules de réception disponibles pour écouter sur les fréquences de ladite liste (LST), lesdites fréquences étant sélectionnées de manière aléatoire (G11) au sein de ladite liste (LST).

4. Procédé de gestion de fréquences selon l'une quelconque des revendications 1 à 3, caractérisé en que ladite plateforme aéroportée configure (E23), pour communiquer avec ladite station au sol cible (VGS2) sur ladite deuxième fréquence (FQ2), le module de communication bidirectionnel (VDR3) qu'elle utilisait pour communiquer avec ladite première station au sol (VGS1) sur ladite première fréquence (FQ1).

5. Procédé de gestion de fréquences selon l'une quelconque des revendications 1 à 3, caractérisé en que ladite plateforme aéroportée configure (E23), pour communiquer avec ladite station au sol cible (VGS2) sur ladite deuxième fréquence (FQ2), un autre module de communication bidirectionnel que celui utilisé pour communiquer avec ladite première station au sol (VGS1) sur ladite première fréquence (FQ1).

6. Procédé de gestion de fréquences selon l'une quelconque des revendications 1 à 5, **caractérisé en ce qu'**il comporte une étape d'activation, en réception, d'un desdits modules (VDR2), pour écouter au moins une fréquence d'un ensemble de fréquences prédéfinies (FQPREDEF) lorsque le nombre desdits modules de réception indépendants (VDR2) est supérieur au nombre de couples dans ladite liste (LST), cet ensemble comportant la fréquence commune dite Common Signaling Channel (CSC) définie dans le standard VDL Mode 2.

7. Dispositif de communication (CMU) embarqué dans une plateforme aéroportée (PAE) compatible avec le mécanisme de gestion de fréquence défini par le standard VDL mode 2, ce dispositif étant apte à configurer au moins un module de communication bidirectionnel (VDR3) et au moins un module de réception indépendant (VDR2), l'un desdits modules bidirectionnels (VDR3) étant apte à établir une communication avec une première station au sol (VGS1) sur une première fréquence (FQ1), ledit dispositif de communication (CMU) étant apte à communiquer avec ladite station au sol (VGS1) en VDL mode 2, ledit dispositif (CMU) étant **caractérisé en ce qu'**il comporte:
- des moyens de réception, sur ladite première fréquence (FQ1), d'un message comportant une liste (LST) comportant au moins un couple, chaque couple associant à une fréquence (FQ2), l'identifiant d'une station au sol (VGS3) apte à communiquer sur cette fréquence ;
- des moyens pour activer en réception, sur réception dudit message, au moins un desdits modules (VDR2), pour écouter au moins une deuxième fréquence de la liste (FQ2);
- des moyens pour détecter au moins un critère représentatif d'une rupture de la communication avec ladite première station au sol;
- des moyens de réception, via l'un desdits modules activés (VDR2), d'au moins un message (MSGID) émis par au moins une deuxième station au sol (VGS2) sur une dite deuxième fréquence (FQ2), ce message comportant des informations permettant à ladite plateforme aéroportée d'établir une communication avec ladite deuxième station au sol;
- des moyens de sélection d'une station au sol cible (VGS2) parmi celles entendues sur ladite au moins une deuxième fréquence; et
- des moyens de configuration d'un desdits modules bidirectionnels (VDR3) pour communiquer avec ladite station cible au sol (VGS2) sur la deuxième fréquence (FQ2).

8. Plateforme aéroportée (PAE) comportant un dispositif de communication (CMU) selon la revendication 7, au moins un module de communication bidirectionnel (VDR3) et au moins un module de réception indépendant (VDR2).

9. Programme d'ordinateur comportant des instructions pour l'exécution des étapes du procédé de gestion de fréquences selon l'une quelconque des revendications 1 à 6 lorsque ledit programme est exécuté par un ordinateur.

10. Support d'enregistrement lisible par un ordinateur, et comportant des instructions d'un programme d'ordinateur permettant l'exécution des étapes d'un procédé de gestion de fréquences selon l'une quelconque des revendications 1 à 6.

## Patentansprüche

1. Verfahren zur Frequenzverwaltung, das mit dem durch den VDL Mode 2 Standard definierten Frequenzverwaltungsmechanismus kompatibel ist, wobei dieses Verfahren durch eine in eine luftgestützte Plattform (PAE) eingebaute Kommunikationsvorrichtung (CMU) durchgeführt wird, die geeignet ist, wenigstens ein bidirektionales Kommunikationsmodul (VDR3) und wenigstens ein unabhängiges Empfangsmodul (VDR2) zu konfigurieren, wobei eines der bidirektionalen Module (VDR3) mit einer ersten Bodenstation (VGS1) auf einer ersten Frequenz (FQ1) in Verbindung steht, wobei die Kommunikationsvorrichtung (CMU) geeignet ist, mit der Bodenstation (VGS1) im VDL Mode 2 zu kommunizieren, wobei das Verfahren **dadurch gekennzeichnet ist, dass** es umfasst:
- einen Schritt (F1) zum Empfangen, auf der ersten Frequenz (FQ1), einer Nachricht, die eine Liste (LST) umfasst, welche wenigstens ein Paar enthält, wobei jedes Paar einer Frequenz (FQ2) die Kennung einer Bodenstation (VGS3) zuordnet, welche geeignet ist, auf dieser Frequenz zu kommunizieren,
- nach Erhalt der Nachricht, einen Schritt (G13) zur Aktivierung wenigstens eines der Module (VDR2) bei Empfang, um wenigstens eine zweite Frequenz der Liste (FQ2) abzuhören,
- einen Schritt (H3) zum Empfangen, über eines der aktivierten Module (VDR2), wenigstens einer Nachricht (MSGID), die durch wenigstens eine zweite Bodenstation (VGS2) auf einer zweiten Frequenz (FQ2) gesendet wird, wobei diese Nachricht Informationen umfasst, die der luftgestützten Plattform ermöglichen, eine Verbindung mit der zweiten Bodenstation herzustellen,
- einen Schritt zum Erfassen wenigstens eines Kriteriums, das für eine Unterbrechung der Verbindung mit der ersten Bodenstation repräsentativ ist,
- einen Schritt (E25) zum Auswählen einer Zielbodenstation (VGS2) aus denjenigen, die auf der wenigstens einen zweiten Frequenz (FQ2) im Laufe des Empfangsschrittes (H3) gehört werden, und
- einen Schritt (E23) zum Konfigurieren von einem der bidirektionalen Module (VDR3), um mit der Zielbodenstation (VGS2) auf der zweiten Frequenz (FQ2) zu kommunizieren.

2. Frequenzverwaltungsverfahren nach Anspruch 1, **dadurch gekennzeichnet, dass** die Auswahl (E25) der Zielbodenstation (VGS2) aus denjenigen, die auf der wenigstens einen zweiten Frequenz (FQ2) gehört werden, in Abhängigkeit von wenigstens einem Element erfolgt, das ausgewählt ist aus:
- die Funkbedingungen zwischen der luftgestützten Plattform und der Bodenstation,
- einem dem Betreiber der luftgestützten Plattform eingeräumten Vorzugstarif,
- Diensten, die durch die Bodenstation angeboten werden,
- einer Angabe, wonach die Station den Zielflughafen abdeckt.

3. Frequenzverwaltungsverfahren nach Anspruch 1 oder 2, **dadurch gekennzeichnet, dass** im Laufe des Aktivierungsschrittes die verfügbaren Empfangsmodule aktiviert werden, um auf den Frequenzen der Liste (LST) abzuhören, wobei die Frequenzen zufallsbedingt (G11) innerhalb der Liste (LST) ausgewählt sind.

4. Frequenzverwaltungsverfahren nach einem der Ansprüche 1 bis 3, **dadurch gekennzeichnet, dass** die luftgestützte Plattform, um mit der Zielbodenstation (VGS2) auf der zweiten Frequenz (FQ2) zu kommunizieren, das bidirektionale Kommunikationsmodul (VDR3), das sie für die Kommunikation mit der ersten Bodenstation (VGS1) auf der ersten Frequenz (FQ1)verwendete, konfiguriert (E23).

5. Frequenzverwaltungsverfahren nach einem der Ansprüche 1 bis 3, **dadurch gekennzeichnet, dass** die luftgestützte Plattform, um mit der Zielbodenstation (VGS2) auf der zweiten Frequenz (FQ2) zu kommunizieren, ein anderes bidirektionales Kommunikationsmodul als das, welches für die Kommunikation mit der ersten Bodenstation (VGS1) auf der ersten Frequenz (FQ1) verwendet wird, konfiguriert (E23).

6. Frequenzverwaltungsverfahren nach einem der Ansprüche 1 bis 5, **dadurch gekennzeichnet, dass** es einen Schritt zur Aktivierung, bei Empfang, von einem der Module (VDR2) umfasst, um wenigstens eine Frequenz einer Menge von vordefinierten Frequenzen (FQPREDEF) abzuhören, wenn die Anzahl der unabhängigen Empfangsmodule (VDR2) größer als die Anzahl von Paaren in der Liste (LST) ist, wobei diese Menge die gemeinsame Frequenz, sogenannte Common Signaling Channel (CSC), die in dem VDL Mode 2 Standard definiert ist, umfasst.

7. In eine luftgestützte Plattform (PAE) eingebaute Kommunikationsvorrichtung (CMU), die mit dem durch den VDL Mode 2 Standard definierten Frequenzverwaltungsmechanismus kompatibel ist, wobei diese Vorrichtung geeignet ist, wenigstens ein bidirektionales Kommunikationsmodul (VDR3) und wenigstens ein unabhängiges Empfangsmodul (VDR2) zu konfigurieren, wobei eines der bidirektionalen Module (VDR3) geeignet ist, eine Verbindung mit einer ersten Bodenstation (VGS1) auf einer ersten Frequenz (FQ1) herzustellen, wobei die Kommunikationsvorrichtung (CMU) geeignet ist, mit der Bodenstation (VGS1) im VDL Mode 2 zu kommunizieren, wobei die Vorrichtung (CMU) **dadurch gekennzeichnet ist, dass** sie umfasst:
- Mittel zum Empfangen, auf der ersten Frequenz (FQ1), einer Nachricht, die eine Liste (LST) umfasst, welche wenigstens ein Paar enthält, wobei jedes Paar einer Frequenz (FQ2) die Kennung einer Bodenstation (VGS3) zuordnet, welche geeignet ist, auf dieser Frequenz zu kommunizieren,
- Mittel, um nach Erhalt der Nachricht wenigstens eines der Module (VDR2) bei Empfang zu aktivieren, um wenigstens eine zweite Frequenz der Liste (FQ2) abzuhören,
- Mittel zum Erfassen wenigstens eines Kriteriums, das für eine Unterbrechung der Verbindung mit der ersten Bodenstation repräsentativ ist,
- Mittel zum Empfangen, über eines der aktivierten Module (VDR2), wenigstens einer Nachricht (MSGID), die durch wenigstens eine zweite Bodenstation (VGS2) auf einer zweiten Frequenz (FG2) gesendet wird, wobei diese Nachricht Informationen umfasst, die der luftgestützten Plattform ermöglichen, eine Verbindung mit der zweiten Bodenstation herzustellen,
- Mittel zum Auswählen einer Zielbodenstation (VGS2) aus denjenigen, die auf der wenigstens einen zweiten Frequenz gehört werden, und
- Mittel zum Konfigurieren von einem der bidirektionalen Module (VDR3), um mit der Zielbodenstation (VGS2) auf der zweiten Frequenz (FQ2) zu kommunizieren.

8. Luftgestützte Plattform (PAE), umfassend eine Kommunikationsvorrichtung (CMU) nach Anspruch 7, wenigstens ein bidirektionales Kommunikationsmodul (VDR3) und wenigstens ein unabhängiges Empfangsmodul (VDR2).

9. Computerprogramm, das Befehle für die Durchführung der Schritte des Frequenzverwaltungsverfahrens nach einem der Ansprüche 1 bis 6, wenn das Programm durch einen Computer ausgeführt wird, umfasst.

10. Aufzeichnungsträger, der durch einen Computer lesbar ist und Befehle eines Computerprogramms enthält, welche die Durchführung der Schritte eines Frequenzverwaltungsverfahrens nach einem der Ansprüche 1 bis 6 ermöglichen.

## Claims

1. A frequency management method compatible with the frequency management mechanism defined by the VDL mode 2 standard, this method being performed by a communications device (CMU) on board an airborne platform (PAE) suitable for configuring at least one bidirectional communications module (VDR3) and at least one independent receiver module (VDR2), one of said bidirectional modules (VDR3) being in communication with a first ground station (VGS1) on a first frequency (FQ1), said communications device (CMU) being suitable for communicating with said ground station (VGS1) in VDL mode 2, said method being **characterized in that** it comprises:
· a reception step (F1) of receiving on said first frequency (FQ1) a message including a list (LST) having at least one pair, each pair associating a frequency (FQ2) with the identifier of a ground station (VGS3) suitable for communicating on that frequency;
· on receiving said message, an activation step (G13) of activating in reception at least one of said modules (VDR2) in order to scan at least one second frequency (FQ2) of the list;
· a reception step (H3) of receiving via one of said activated modules (VDR2) at least one message (MSGID) transmitted by at least one second ground station (VGS2) on a said second frequency (FQ2), said message including information enabling said airborne platform to set up communication with said second ground station;
· a detection step of detecting at least one criterion representative of a break in communication with said first ground station;
· a selection step (E25) of selecting a target ground station (VGS2) from the ground stations heard on said at least one second frequency (FQ2) during said reception step (H3); and
· a configuration step (E23) of configuring one of said bidirectional modules (VDR3) to communicate with said target ground station (VGS2) on the second frequency (FQ2).

2. A frequency management method according to claim 1, **characterized in that** the selection (E25) of said target ground station (VGS2) from among those heard on said at least one second frequency (FQ2) is made as a function of at least one element selected from:
· radio conditions between the airborne platform and the ground station;
· special tariffs granted to the operator of the airborne platform;
· services offered by the ground station; and
· an indication as to whether the station covers the destination airport.

3. A frequency management method according to claim 1 or claim 2, **characterized in that** during said activation step, the receiver modules available for scanning the frequencies of said list (LST) are activated, said frequencies being selected in random manner (G11) from within said list (LST).

4. A frequency management method according to any one of claims 1 to 3, **characterized in that**, in order to communicate with said target ground station (VGS2) on said second frequency (FQ2), said airborne platform configures (E23) the bidirectional communications module (VDR3) that it was using for communicating with said first ground station (VGS1) on said first frequency (FQ1).

5. A frequency management method according to any one of claims 1 to 3, **characterized in that**, in order to communicate with said target ground station (VGS2) on said second frequency (FQ2), said airborne platform configures (E23) a bidirectional communications module other than that used for communicating with said first ground station (VGS1) on said first frequency (FQ1).

6. A frequency management method according to any one of claims 1 to 5, **characterized in that** it includes a step of activating in reception one of said modules (VDR2) to scan at least one frequency of a set of predefined frequencies (FQPREDEF) when the number of said independent receiver modules (VDR2) is greater than the number of pairs in said list (LST), the set including the common signaling channel (CSC) frequency defined in the VDL mode 2 standard.

7. A communications device (CMU) on board an airborne platform (PAE) compatible with the frequency management mechanism defined by the VDL mode 2 standard, the device being suitable for configuring at least one bidirectional communications module (VDR3) and at least one independent receiver module (VDR2), one of said bidirectional modules (VDR3) being suitable for setting up communication with a first ground station (VGS1) on a first frequency (FQ1), said communications device (CMU) being suitable for communicating with said ground station (VGS1) in VDL mode 2, said device (CMU) being **characterized in that** it comprises:
· receiver means for receiving on said first frequency (FQ1) a message including a list (LST) having at least one pair, each pair associating a frequency (FQ2) with the identifier of a ground station (VGS3) suitable for communicating on that frequency;
· activation means for acting on reception of said message, to activate in reception at least one of said modules (VDR2) in order to scan at least one second frequency (FQ2) of the list;
· detector means for detecting at least one criterion representative of a break in communication with said first ground station;
· receiver means for receiving via one of said activated modules (VDR2) at least one message (MSGID) transmitted by at least one second ground station (VGS2) on a said second frequency (FQ2), said message including information enabling said airborne platform to set up communication with said second ground station;
· selection means for selecting a target ground station (VGS2) from the ground stations heard on said at least one second frequency; and
· configuration means for configuring one of said bidirectional modules (VDR3) to communicate with said target ground station (VGS2) on the second frequency (FQ2).

8. An airborne platform (PAE) including a communications device (CMU) according to claim 7, at least one bidirectional communications module (VDR3), and at least one independent receiver module (VDR2).

9. A computer program including instructions for executing steps of the frequency management method according to any one of claims 1 to 6 when said program is executed by a computer.

10. A computer readable data medium including instructions of a computer program enabling steps of a frequency management method according to any one of claims 1 to 6 to be executed.
